# EUROPÄISCHE PATENTANMELDUNG

(11) **EP 0 683 348 A2**
(43) Veröffentlichungstag der Anmeldung: **22.11.1995**
(21) Anmeldenummer: 95107387.3
(22) Anmeldetag: 16.05.1995
(51) Int. Cl.: F16L 55/16, F16L 55/18

(54) **Vorrichtung zum Abdichten von Kanalwandungen im Bereich des Anschlusses eines Nebenkanals an einen Hauptkanal**

(30) Priorität: 17.05.1994 DE 4417076
(71) Anmelder: D.T.I. Dr. TRIPPE INGENIEURGES. mbH., D-76043 Karlsruhe (DE)
(72) Erfinder: Schramm, Peter, D-76131 Karlsruhe (DE); Trippe, Gustav, Dr., D-76133 Karlsruhe (DE)

(57) **Zusammenfassung**

Die Erfindung betrifft eine Vorrichtung zum Abdichten von Kanalwandungen im Bereich des Anschlusses eines Nebenkanals an einen Hauptkanal. Die Vorrichtung weist einen im Bereich des Nebenkanalanschlusses an die Wandung des Hauptkanals anlegbaren Schild auf, der einen in den Nebenkanal einbringbaren, aufblasbaren Dehnkörper trägt, der im aufgeblasenen Zustand gegen die Wandung des Nebenkanals anliegt und dann zusammen mit dem Schild eine Schalung bildet.

Dabei ist der Dehnkörper ausschließlich aus einer Schicht elastischen, biegeschlaffen Materials gebildet, kann allein durch Aufblasen in den Nebenkanal eingebracht werden und ist durch Verminderung des ihn beaufschlagenden Druckes aus dem Nebenkanal ausbringbar.

## Beschreibung

Die Erfindung betrifft eine Vorrichtung zum Abdichten von Kanalwandungen im Bereich des Anschlusses eines Nebenkanals an einen Hauptkanal, mit einer im Hauptkanal verfahr- und festlegbaren Trage- und Positioniervorrichtung für einen im Bereich des Nebenkanalanschlusses an die Wandung des Hauptkanals anlegbaren, der Wandungskrümmung anpaßbaren Schild, der einen in den Nebenkanal einbringbaren, aufblasbaren Dehnkörper trägt, der im aufgeblasenen Zustand gegen die Wandung des Nebenkanals anliegt und dann zusammen mit dem Schild eine Schalung bildet, derart, daß in den Raum zwischen dieser Schalung und den ihr benachbarten Wandungen des Haupt- und des Nebenkanals eine Dichtmasse einpreßbar ist, die nach dem Ausbringen des Dehnkörpers aus dem Nebenkanal und dem Entfernen des Schildes aus dem Kanalanschlußbereich abgedichtete Kanalwandbereiche bildet.

Eine solche Vorrichtung ist aus der europäischen Patentschrift EP 455 764 B1 bekannt. Bei dieser ist der Dehnkörper ein in unaufgeblasenem Zustand rohrförmiger Ballon, der aus dem Schild in Richtung der Innenwand der Hauptleitung herausragt. Zum Ausbessern eines schadhaften Kanalanschlußbereichs wird über diesen dehnbaren Zylinderkörper eine Schalung geschoben, der Zylinderkörper zusammen mit der aufgeschobenen Schalung durch Verfahren des Schildes in zum Hauptkanal radialer Richtung in den Nebenkanal eingebracht und anschließend der Ballon mit Druck beaufschlagt. Dabei wird die Schalung aufgeweitet und an die Innenwand der Nebenleitung angepreßt. Der Raum zwischen der Schalung, dem Schild und den beschädigten Rohrwandungen wird anschließend mit einer Dichtungsmasse ausgefüllt.

Diese Vorrichtung ermöglicht zwar, Kanalanschlußbereiche ferngesteuert abzudichten, ohne daß der Nebenkanal, wie bei anderen Sanierungsverfahren, im Anschluß an das Einbringen der Dichtungsmasse aufgebohrt oder ausgefräst werden muß. Sie ist aber dadurch nachteilig, daß der Deh nkörper i m nicht aufgeblasenen Zustand bereits in voller, im wesentlichen auch nach dem Einbringen in den Nebenkanal erfolgender Druckbeaufschlagung beibehaltener Länge radial von dem Schild absteht. Dies kann zu Problemen beim Verfahren des Schildes entlang der Hauptleitung und bei seiner Positionierung gegenüber der Einmündung des Nebenkanals in den Hauptkanal führen. Die maximale Längenausdehnung des rohrförmigen Ballons findet durch den Durchmesser des Hauptkanals vorgegebene Grenzen, so daß auch die maximale Eindringtiefe in den Nebenkanal und damit die maximal mögliche Bearbeitungstiefe im Nebenkanal, ausgehend von der Einmündungsstelle, begrenzt ist. Weiterhin setzt die bekannte Vorrichtung senkrecht und achsmittig zum Hauptkanal abzweigende Nebenkanäle voraus. Für in einem von 90 Grad merklich verschiedenen Winkel abzweigende Nebenkanäle ist sie kaum geeignet, da sich der Zyl inderkörper mit der aufgeschobenen Schalung dann nicht mehr in den Nebenkanal einfahren ließe, jedenfalls nicht so, daß die Schalung wandbündig den gesamten Umfang des an den Hauptkanal unmittelbar angrenzenden Wandbereichs des Nebenkanals abdeckt. Ferner erfordert die bekannte Vorrichtung den Einsatz eines zusätzlichen, auf den Zylinderkörper aufgeschobenen Schalungsbauteils. Ein Einsatz ohne Schalungsbauteil ist nicht beabsichtigt. Es müßte dann auch mit Problemen beim Herausziehen des Zylinderkörpers aus dem Nebenkanal gerechnet werden. Die Anpassung der Vorrichtung an unterschiedliche Kanalnennweiten ist allenfalls durch aufwendiges Umrüsten von Bauteilen möglich.

Eine fernsteuerbare Vorrichtung zum Reparieren von Kanaleinmündungen zeigt auch die deutsche Offenlegungsschrift DE 42 13 898. Auch diese Vorrichtung ist mit einem Dehnkörper ausgestattet, der mit seiner ganzen, im wesentlichen auch nach dem Aufblasen beibehaltenen Länge radial zum Hauptkanal verfahren wird, denn der aufblasbare Mantel des Dehnkörpers umgibt einen steifen zylindrischen Stützkörper. Diese Vorrichtung weist daher ebenfalls die zuvor erwähnten Nachteile auf.

Schließlich ist mit der europäischen Offenlegungsschrift EP 114 727 A1 ein in den USAentwickeltes, unter der Bezeichnung LSS-System - Lateral Sealing System - bekanntgewordenes Kanalsanierungsverfahren offenbart, bei dem ein Packer mit zwei aufblasbaren Packermanschetten, die durch ein Zwischenstück miteinander verbunden sind, in den Hauptkanal eingebracht wird. Aus dem Zwischenteil kann seitlich ein Schlauch mit Druckluft in Anschlußkanäle eingefahren werden. Zwischen Rohrwandung und Schlauch eingepreßtes Injektionsmittel dichtet den Kanal ab. Abdichtmasse gelangt auch in den Ringraum zwischen dem Zwischenteil und der Wandung des Hauptkanals. Im praktischen Einsatz hat sich erwiesen, daß der Packer bei großen Mengen zu verpressenden, insbesondere stark verfestigenden Dichtmaterials nur unter großen Schwierigkeiten entfernt werden kann.

Da das Zwischenteil zur Winkelpositionierung des Schlauches gegenüber der Einmündung des Nebenkanals drehantreibbar zwischen den Endmanschetten gelagert ist, ferner auch eine Einrichtung zum Ab- bzw. Aufwickeln des Schlauches im Zwischenteil aufgenommen ist, ist die gesamte Vorrichtung außerordentlich konstruktionsaufwendig. Ebenso wie die zuvor zum Stand der Technik gewürdigten Vorrichtungen ist sie an Kanalnennweiten vorgegebener, relativ enger Durchmesserbereiche gebunden und daher ohne aufwendige Umrüstungen nur wenig flexibel einsetzbar.

Demgegenüber liegt der Erfindung die Aufgabe zugrunde, die zuvor beim Stand der Technik genannten Nachteile zu vermeiden, d. h. eine Vorrichtung zum Abdichten von Kanalwandungen im Bereich des Anschlusses eines Nebenkanals an einen Hauptkanal anzugeben, die bei geringem konstruktiven Aufwand in einem großen Kanal-Nennweitenbereich ohne Umrüstungen verwendbar, leicht zu positionieren und problemlos nach dem Abdichten aus dem Anschlußbereich zu entfernen ist. Darüber hinaus soll die Vorrichtung ebenso wie für senkrecht abzweigende auch für unter einem spitzen Winkel und/oder mit gekrümmter Rohrachse und/oder nicht achsmittig zum Hauptkanal verlaufende Nebenkanalanschlüsse in gleicherweise geeignet sein. Schließlich sollen auch Schäden im Nebenkanal abdichtbar sein, die in einer über den Durchmesser des Hauptkanals hinausgehenden Tiefe vorliegen.

Die Lösung dieser Aufgabe erfolgt durch eine Vorrichtung mit den Merkmalen des Patentanspruchs 1, also dadurch, daß bei einer gattungsgemäßen Vorrichtung der Dehnkörper ausschließlich aus einer Schicht elastischen Materials gebildet ist, daß der Dehnkörper in schwach aufgeblasenem Zustand zunächst die Form eines von dem Schild ausgehenden, an der Spitze abgerundeten Hohlkegels einnimmt, die bei zunehmendem Aufblasen in eine dem Durchmesser des Nebenkanals und seiner Abwinkelung zum Hauptkanal entsprechende Zylinderform übergeht, wobei der Dehnkörper zunehmend in den Nebenkanal hineinwächst, und daß der Dehnkörper durch Verminderung des ihn beaufschlagenden Druckes aus dem Nebenkanal ausbringbar ist.

Die Unteransprüche betreffen vorteilhafte Ausgestaltungen der erfindungsgemäßen Vorrichtung.

Die der Erfindung entsprechende Vorrichtung verwendet also einen Dehnkörper, der keinerlei Stützkörper aufweist und allein aufgrund seiner Elastizität und seiner berechneten Schichtdicken nach der Positionierung des Schildes an der Wandung des Hauptkanals beim Aufblasen selbsttätig und absolut zuverlässig sowohl in radialer als auch in axialer Richtung in den Nebenkanal hineinwächst und sich dabei eng an die Wandungen eines unter einem beliebigen Winkel abzweigenden Nebenkanals anlegt, und zwar auch dann, wenn der Nebenkanal nicht achsmittig zum Hauptkanal oder direkt hinter dem Anschlußbereich gekrümmt oder abgeknickt verläuft.

Letzteres ist ein wesentlicher Vorteil der erfindungsgemäßen Vorrichtung gegenüber den eingangs zum Stand der Technik abgehandelten Abdichteinrichtungen, denn bei Sanierungsarbeiten in der Praxis ist damit zu rechnen, daß etwa 9 von 10 Nebenkanälen anders als achsmittig und geradlinig unter einem Winkel von 90 Grad zum Hauptkanal abzweigen.

Die Wirkungsweise der Vorrichtung ist dabei bei Nebenkanälen unterschiedlicher Nennweiten über einen großen Nennweitenbereich unverändert gleich. Das heißt, mit ein und demselben Dehnkörper können Nebenkanäle ganz unterschiedlicher Durchmeser ausgebessert werden. Beispielsweise kann ein bestimmter Dehnkörper in einem Bereich von Nennweite 100 bis Nennweite 200 des Nebenkanals eingesetzt werden. Nennweitenänderungen mit Faktor 2 können also noch mit ein und demselben Dehnkörper bewältigt werden. Umrüstungen zurAnpassung an von dem normalen Kanaldurchmesserbereich stark abweichende Kanaldurchmesser müssen daher nur noch in seltenen Fällen vorgenommen werden, sind dann aber problemlos möglich, da das Auswechseln des überaus einfach aus lediglich einer elastischen Materialschicht gebildeten Dehnkörpers - und ggf. zur Anpassung an den Durchmesser des Hauptkanals auch des Schildes - nur einen geringen Montageaufwand erfordert.

Nach dem Einpressen der Dichtmasse kann der Dehnkörper schon nach sehr kurzer Zeit druckentlastet werden, wobei er kollabiert und ohne die gerade ausgebesserte Wandung in irgendeiner Weise zu beeinträchtigen aus dem Nebenkanal ausbringbar ist. Das Ablösen der Dehnkörperoberfläche durch Druckabbau ist so schonend möglich, daß auch noch nicht vollständig ausgehärtete Dichtmasse unversehrt in der frisch ausgebesserten Kanalwandung verbleibt. Das Ausschalen des sanierten Kanalbereichs ist also sehrfrühzeitig möglich. Es kann überdies noch schneller erfolgen, wenn auf den der Wandung des Hauptkanals zugewandten Bereich des Schildes eine dünne, verlorene Trennschicht, insbesondere eine Kunststoffolie aufgebracht wird, die im sanierten Kanal verbleibt.

Die Dichtmasse kann insbesondere über Rohre oder Schläuche unter Druck herangefördert werden und wird über mehrere Mundstücke am Fuß des Dehnkörpers, das heißt im Bereich seiner Anbindung an den Schild, in den Verpreßspalt eingebracht. Sie verteilt sich dabei insbesondere am Fuß des Dehnkörpers um diesen herum.

Für Sonderfälle von tiefer in den Nebenkanal hineinragenden Wandungsschäden können Dehnkörper mit einer besonders großen linearen Ausdehnungsfähigkeit vom Schild aus verwendet werden, in deren an den Fuß anschließender Oberfläche eine oder mehrere Austrittsöffnungen für die Dichtmasse ausgebildet sind. Diese Austrittsöffnungen stehen mit bewegbaren Zuführleitungen in Verbindung, die beim Hineinwachsen des Dehnkörpers in den Nebenkanal der Oberfläche des Dehnkörpers nachgeführt werden und der sich fortbewegenden Austrittsöffnung folgen. Die Dichtmasse kann so auch an tiefer im Nebenkanal liegende Schadstellen in ausreichender Menge und unter ausreichendem Druck herangebracht werden.

Die anfängliche Schichtdicke der elastischen Materialschicht des Dehnkörpers ist in Abhängigkeit von seiner Oberflächenerstreckung so berechnet, daß sich beim Aufblasen zunächst die Raumform eines an der Spitze abgerundeten Hohlkegels ergibt, und daß sich bei zunehmendem Aufblasen eine von der Kegelbasis, also dem Schild ausgehende, dem Verlauf des Nebenkanals angepaßte, der Kegelspitze folgende Zylinderform ausbildet. Dadurch wird es möglich, daß der Dehnkörper bei minimierter Reibung an den Wandungen des Nebenkanals bis in eine ausreichende Tiefe in den Nebenkanal hineinwachsen und unter umgekehrtem Formänderungsverhalten nach der Druckentlastung von derausgebesserten Wand getrennt und aus dem Nebenkanal ausgebracht werden kann.

Das Ausbringen kann mittels Unterdruck erfolgen, so daß der Dehnkörper bis hinter die Anlegefläche des Schildes einsaugbar ist und dann insbesondere komplett in einem flachen Kasten am Schild versenkt sein kann. Diese Position kann auch die Anfangsposition sein, aus der der Dehnkörper durch Aufblasen in den Nebenkanal eingebracht wird, so daß der Dehnkörper beim Verfahren der Trage- und Positioniervorrichtung im Hauptkanal überhaupt nicht über den Schild hervorsteht.

Die Schichtdicke des Dehnkörpers ist im übrigen so optimiert, daß im in den Nebenkanal eingebrachten Zustand seine Zylinderform weitgehend erhalten bleibt, auch wenn Teile der Nebenkanalwand fehlen. Dazu ist die Wandstärke des Dehnkörpers so berechnet, daß sie über eine Steuerung des Dehnkörper-Innendrucks und des Förderdrucks der Dichtmasse ihre der Nennweite des Nebenkanals entsprechende Zylinderform beizubehalten vermag, insbesondere auch im Bereich der schadhaften Wandungsteile. Die Wiederherstellung der beschädigten Kanalwand erfolgt daher recht genau bzw. fehlende Kanalwände werden paßförmig neu gebildet, so daß in der Sanierungspraxis in den meisten Fällen eine anschließende materialabtragende Kanalwandbearbeitung nicht mehr erforderlich ist.

Der ganz besondere Vorteil der erfindungsgemäßen Vorrichtung liegt darin, daß sie im Gegensatz zu den eingangs zum Stand der Technik gewürdigten Vorrichtungen zum Ausbessern von unter einem beliebigen Winkel zum Hauptkanal, auch außerhalb von dessen Achsmitte oder gekrümmt verlaufenden Nebenkanälen geeignet ist. Auch wenn der Nebenkanal mit dem Hauptkanal einen spitzen Winkel bildet,wächst der Dehnkörper aufgrund seiner sehr großen Anpassungsfähigkeit beim Aufblasen problemlos vom Schild aus in den Nebenkanal hinein. Er läßt sich dann nach erfolgter Abdichtung ebenso problemlos durch Druckentlastung oder Aufbringen von Unterdruck auch wieder aus dem Nebenkanal entfernen.

Schließlich ist mit der erfindungsgemäßen Vorrichtung auch die Positionierung des Schildes im Bereich des Kanalanschlusses vereinfacht, denn der Dehnkörper ist schon dann durch Aufblasen in den Nebenkanal einbringbar, wenn sich seine abgerundete Hohlkegelspitze irgendwo innnerhalb der Einmündung des Nebenkanals befindet. Die hohe Anpassungsfähigkeit des Dehnkörpers an die ihn umgebenden Kanalwandungen gleicht etwaige Positionierungenauigkeiten aus. Die Positionierung erfordert daher keinen großen Aufwand und ist schnell und einfach durchzuführen.

Der Schild der Vorrichtung kann so großflächig ausgebildet und mit entsprechenden Austrittsöffnungen für Dichtmasse versehen sein, daß die in der Praxis häufig auftretenden sternförmigen Rißbildungen im Hauptkanal in einem Arbeitsgang zusammen mit der Ausbesserung des Nebenkanals abgedichtet werden.

Weiterhin ist der Schild aufgrund seines Aufbaus dazu in der Lage, sich innerhalb eines gewissen Nennweitenbereichs des Hauptkanals an dessen Wandkrümmung anzupassen, so daß zumindes die in der Praxis öfters vorkommenden Durchmesservariationen abgedeckt werden, die sich aufgrund der nach DIN zulässigen Toleranzen, z. B. bei verschiedenen Materialien, ergeben. Er kann dazu eine gummiartige Auflage aufweisen. Ebenso kann er als Struktur mit in Längsrichtung des Hauptkanals verlaufenden, gegeneinander abwinkelbaren Lamellen ausgebildet sein.

Es liegt innerhalb der Erfindung, daß unter Aufblasen des Dehnkörpers allgemein seine Aufweitung durch Aufbringen von Innendruck verstanden werden soll. Dies kann mittels eines Gases, insbesondere Luft, erfolgen. Denkbar ist aber auch, den Dehnkörper durch Einpumpen einer Flüssigkeit aufzuweiten.

Die Trage- und Positioniervorrichtung der erfindungsgemäßen Vorrichtung kann, wie nachfolgend anhand der Zeichnung erläutert, auf unterschiedliche Weise gebildet werden.

Die Figuren zeigen:
Figur 1 : eine erste Ausführungsform der Trage- und Positioniervorrichtung,
Figur 2 : eine zweite Ausführungsform,
Figur 3: eine dritte Ausführungsform,
Figur 4 : die Verwendung der erfindungsgemäßen Vorrichtung in Verbindung mit einer der ersten Ausführungsform entsprechenden Trage- und Positioniervorrichtung zum Abdichten von verschiedenartig zum Hauptkanal verlaufenden Nebenkanalanschlüssen.

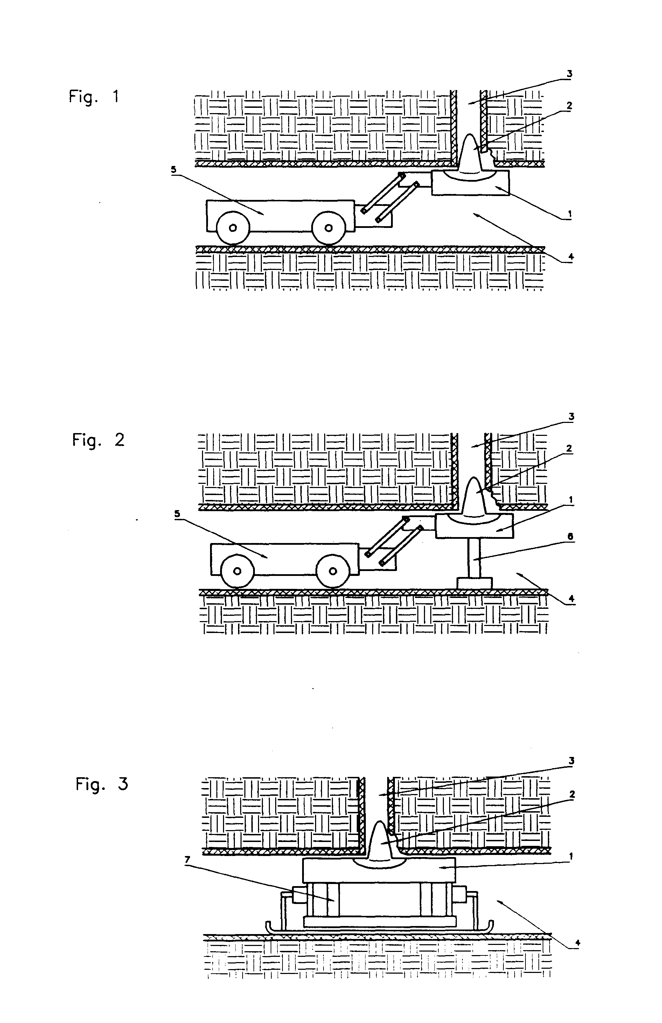

Nach einer ersten, in Figur 1 schematisch dargestellten Ausführungsform ist die Trage- und Positioniervorrichtung ein fernsteuerbarer Kanalsanierungsroboter. An dessen in drei Freiheitsgraden bewegbarem Kopf ist der Schild 1 befestigt, der mittels des von außen steuerbaren Kopfantriebs zusammen mit dem Dehnkörper 2 im Anschlußbereich des Nebenkanals 3 an den Hauptkanal 4 positioniert werden kann.

Mit Figur 2 ist dargestellt, daß die Trage- und Positioniervorrichtung auch eine Spannvorrichtung 6 umfassen kann, die sich gegen den dem Schild 1 radial gegenüberliegenden Wandungsbereich des Hauptkanals 4 abstützt und den Schild 1 im Kanalanschlußbereich anpreßt.

Figur 3 zeigt in schematischer Darstellung, daß die Trage- und Positioniervorrichtung auch ein Schlitten 7 sein kann, an dem der Schild 1 mit dem Dehnkörper 2 um eine zur Achse des Hauptkanals 4 parallele Drehachse drehbar befestigt ist. Der Schild 1 ist auf diese Weise besonders zuverlässig in Umfangsrichtung des Hauptkanals 4 positionierbar. Der Schlitten 7 weist Mittel zum Anpressen des Schildes 1 an die Wandung des Hauptkanals 4 auf.

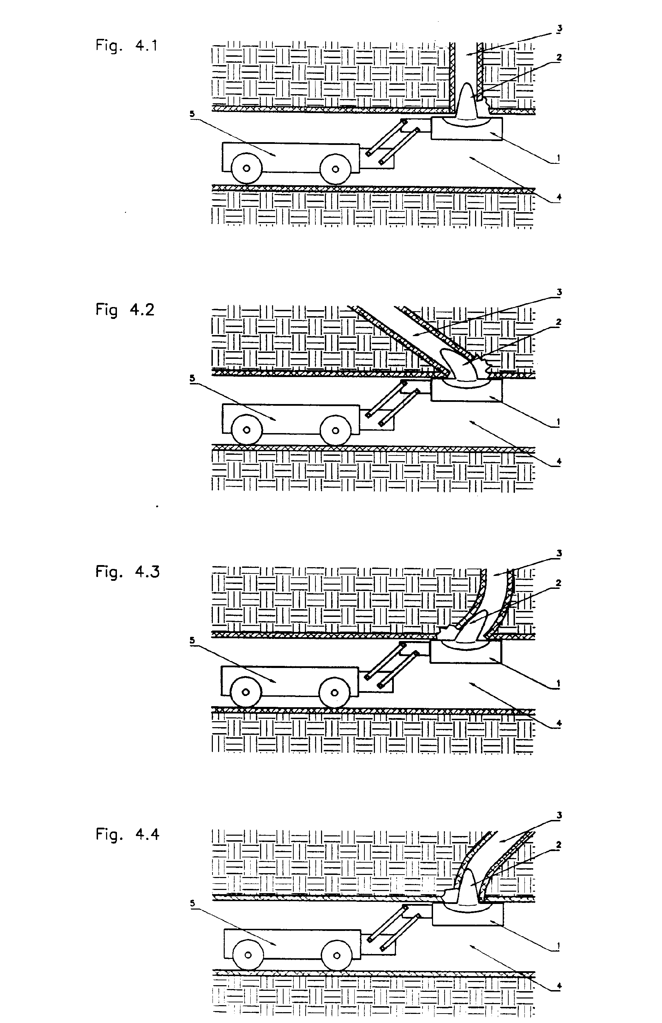

Aus Figur4 ist anhand der dargestellten vier Beispiele ersichtlich, wie der Dehnkörper2 in verschiedenartig zum Hauptkanal verlaufende Nebenkanäle 3 hineinwächst, wobei anfänglich noch ein Zwischenraum zurwandung des Nebenkanals 3 vorhanden ist, der bei zunehmendem Aufblasen des Dehnkörpers 2 vollständig verschwindet, so daß der Dehnkörper 2 schließlich überall fest an der Wand anliegt.

Es sei ausdrücklich darauf hingewiesen, daß die Figuren den Dehnkörper 2 lediglich schematisch darstellen. Seine anfängliche, beziehungsweise sich bei Druckbeaufschlagung einstellende spezielle Raumform entspricht der textlichen Beschreibung oben und den Angaben des Patentanspruchs 1.

### Bezugszeichenliste

1 Schild
2 Dehnkörper
3 Nebenkanal
4 Hauptkanal
5 Kanalsanierungsroboter
6 Spannvorrichtung
7 Schlitten

## Patentansprüche

1. Vorrichtung zum Abdichten von Kanalwandungen im Bereich des Anschlusses eines Nebenkanals (3) an einen Hauptkanal (4), mit einer im Hauptkanal (4) verfahr- und festlegbaren Trage- und Positioniervorrichtung für einen im Bereich des Nebenkanalanschlusses an die Wandung des Hauptkanals (4) anlegbaren, der Wandungskrümmung anpaßbaren Schild (1), der einen in den Nebenkanal (3) einbringbaren, aufblasbaren Dehnkörper (2) trägt, der im aufgeblasenen Zustand gegen die Wandung des Nebenkanals (3) anliegt und dann zusammen mit dem Schild (1) eine Schalung bildet, derart, daß in den Raum zwischen dieser Schalung und den ihr benachbarten Wandungen des Haupt- und des Nebenkanals (4,3) eine Dichtmasse einpreßbar ist, die nach dem Ausbringen des Dehnkörpers (2) aus dem Nebenkanal (3) und dem Entfernen des Schildes (1) aus dem Kanalanschlußbereich abgedichtete Kanalwandbereiche bildet,
dadurch gekennzeichnet,
daß der Dehnkörper (2) ausschließlich aus einer Schicht elastischen Materials gebildet ist,
daß der Dehnkörper (2) in schwach aufgeblasenem Zustand zunächst die Form eines von dem Schild (1) ausgehenden, an der Spitze abgerundeten Hohlkegels einnimmt, die bei zunehmendem Aufblasen in eine dem Durchmesser des Nebenkanals (3) und seiner Abwinkelung zum Hauptkanal (4) entsprechende Zylinderform übergeht, wobei der Dehnkörper (2) zunehmend in den Nebenkanal (3) hineinwächst, und daß der Dehnkörper (2) durch Verminderung des ihn beaufschlagenden Druckes aus dem Nebenkanal (3) ausbringbar ist.

2. Vorrichtung nach Anspruch 1, dadurch gekennzeichnet, daß der Dehnkörper (2) durch Anlegen von Unterdruck bis hinter die gekrümmte Anlegefläche des Schildes (1) einsaugbar ist.

3. Vorrichtung nach Anspruch 1 oder 2, dadurch gekennzeichnet, daß die Trage- und Positioniervorrichtung ein Kanalsanierungsroboter (5) ist, an dessen Arbeitskopf der Schild (1) befestigt ist.

4. Vorrichtung nach einem oder mehreren der vorhergehenden Ansprüche, dadurch gekennzeichnet, daß die Trage- und Positioniervorrichtung eine Spannvorrichtung (6) umfaßt, die sich gegen den dem Schild (1) gegenüberliegenden Wandungsbereich des Hauptkanals (4) abstützt und den Schild (1) an die Hauptkanalwandung im Bereich des Nebenkanalanschlusses anpreßt.

5. Vorrichtung nach Anspruch 1 oder 2, dadurch gekennzeichnet, daß die Trage- und Positioniervorrichtung einen Schlitten (7), an dem der Schild (1) mit dem Dehnkörper (2) um eine zur Achse des Hauptkanals (4) parallele Drehachse drehbar bedestigt ist, und eine Einrichtung zum Anpressen des Schildes an die Wandung des Hauptkanals (4) umfaßt.

6. Vorrichtung nach einem oder mehreren der vorhergehenden Ansprüche, dadurch gekennzeichnet, daß am Fuß des Dehnkörpers (2), im Bereich seinerAnbindung an den Schild (1), Mundstücke zum Einbringen der unter Druck über Rohre und/oder Schläuche herangeführten Dichtmasse in den mittels der Vorrichtung gebildeten Verpreßspalt vorgesehen sind.

7. Vorrichtung nach einem oder mehreren der vorhergehen Ansprüche, dadurch gekennzeichnet, daß der Dehnkörper (2) in der an seinen Fuß anschließenden Oberfläche eine oder mehrere Austrittsöffnungen für die Dichtmasse aufweist, die mit bewegbaren Zuführleitungen für die Dichtmasse in Verbindung stehen, derart, daß beim Hineinwachsen des Dehnkörpers (2) in den Nebenkanal (3) diese Zuführleitungen der sich in den Nebenkanal (3) hineinbewegenden Oberfläche des Dehnkörpers (2) nachfolgen.

8. Vorrichtung nach einem oder mehreren der vorhergehenden Ansprüche, dadurch gekennzeichnet, daß der Schild (1) eine der Wandung des Hauptkanals (4) zugekehrte Beschichtung aus gummiartigem Material aufweist.

9. Vorrichtung nach einem oder mehreren der vorhergehenden Ansprüche, dadurch gekennzeichnet, daß der Schild (1) eine Struktur aus in Längsrichtung des Hauptkanals (4) verlaufenden, gegeneinander abwinkelbaren Lamellen aufweist.
